# EUROPEAN PATENT SPECIFICATION

(11) **EP 1 875 815 B1**
(45) Date of publication and mention of the grant of the patent: **14.04.2010**
(21) Application number: 07252656.9
(22) Date of filing: 30.06.2007
(51) Int. Cl.: A23L 1/226

(54) **Use of 1, 2-dihydroperillaldehyde in flavor applications**
Verwendung von 1,2-Dihydroperillaldehyd in Geschmacksanwendungen
Utilisation de dihydroperillaldehyde 1, 2 dans des applications de saveur

(30) Priority: 06.07.2006 US 428612
(43) Date of publication of application: 09.01.2008
(73) Proprietor: International Flavors & Fragrances, Inc., New York New York 10019 (US)
(72) Inventor: Dewis, Mark L., Matawan New Jersey 07747 (US); Da Costa, Neil C., Middletown New Jersey 07748 (US); Pei, Tao, Morganville New Jersey 07751 (US); Merritt, Debra, Ringoes New Jersey 08551 (US); Conklin, Garry, Pequannock New Jersey 07440 (US)
(74) Representative: Lawrence, John

(56) References cited:
- US-A- 3 810 995
- FRONZA, G. ET AL: "Stereochemical aspects of the bioreduction of the conjugated double bond of perillaldehyde" TETRAHEDRON: ASYMMETRY, vol. 15, no. 19, 2004, pages 3073-3077, XP002454230

## Description

### FIELD OF THE INVENTION

The use of 1,2-Dihydroperillaldehyde is disclosed as a flavor chemical suitable for incorporation in food products and related applications.

### BACKGROUND OF THE INVENTION

There is an ongoing need in the flavor industry to provide new flavor chemicals that enhance or provide new flavors for food preparations.

The preparation of the compound 1,2-Dihydroperillaldehyde is disclosed by Fronza, G. et al; Tetrahedron: Asymmetry, 15(19), (2004) 3073-3077. The authors disclose the synthetic preparation of the compound and the use of the compound at a dilution level of 0.2 parts per million in order to impart an effective watery character to fruit formulations.

### SUMMARY OF THE INVENTION

The present invention is directed to the use of 1,2-Dihydroperillaldehyde in an amount less than 0.15 parts per million (ppm) to enhance the flavor of the food.

These and other embodiments of the present invention will be apparent by reading the following specification.

### DETAILED DESCRIPTION OF THE INVENTION

The present invention is directed to the use of the compound 1,2-Dihydroperillaldehyde in flavor formulations.

We have surprisingly discovered that the addition of low levels of 1,2-Dihydroperillaldehyde to foodstuff enhances the flavor.

As used herein flavor effective amount is understood to mean the amount of compound in flavor compositions the individual component will contribute to its particular olfactory characteristics, but the flavor effect of the composition will be the sum of the effects of each of the aroma or flavor ingredients. Thus the compounds of the invention can be used to alter the taste characteristics of the flavor composition by modifying the taste reaction contributed by another ingredient in the composition. The amount will vary depending on many factors including other ingredients, their relative amounts and the effect that is desired.

According to the present invention the level of 1,2-Dihydroperillaldehyde used in flavor compositions is less than 0.15 parts per million (ppm). Furthermore, 1,2-Dihydroperillaldehyde may be used to enhance flavors in a finished food product at levels from about 100 to about 0.1 parts per billion (ppb). Additionally, 1,2-Dihydroperillaldehyde may be used to enhance the flavor of dairy flavors such as Dulce de leche at levels as low as about 100 parts per billion to about 50 parts per billion by weight. Another preferred use of the compound of the present invention is the use of 1,2-Dihydroperillaldehyde in combination with citrus products at levels of from about 1 to about 10 parts per billion. In meat products levels of 1,2-Dihydroperillaldehyde from about 1 to about 5 parts per billion were found to enhance the meat flavor.

The term "foodstuff" as used herein includes both solid and liquid ingestible materials for man or animals, which materials usually do, but need not, have nutritional value. Thus, foodstuffs include meats, gravies, soups, convenience foods, malt, alcoholic and other beverages, soy-containing products, milk and dairy products, herbs including basil, dill weed, parsley, oregano, marjoram, sage, thyme, rosemary, mint, cilantro, tarragon, chervil, seafoods, including fish, crustaceans, mollusks and the like, candies, vegetables, cereals, soft drinks, snacks, dog and cat foods, other veterinary products and the like.

When the compounds of this invention are used in a flavoring composition, they can be combined with conventional flavoring materials or adjuvants. Such co-ingredients or flavor adjuvants are well known in the art for such use and have been extensively described in the literature. Requirements of such adjuvant materials are: (1) that they are non-reactive with the 1,2-Dihydroperillaldehyde of our invention; (2) that they are organoleptically compatible with the 1,2-Dihydroperillaldehyde derivative(s) of our invention whereby the flavor of the ultimate consumable material to which the 1,2-Dihydroperillaldehyde are added is not detrimentally affected by the use of the adjuvant; and (3) that they are ingestibly acceptable and thus non-toxic or otherwise non-deleterious. Apart from these requirements, conventional materials can be used and broadly include other flavor materials, vehicles, stabilizers, thickeners, surface active agents, conditioners and flavor intensifiers.

Such conventional flavoring materials include saturated fatty acids, unsaturated fatty acids and amino acids; alcohols including primary and secondary alcohols, esters, carbonyl compounds including aldehydes (other than the 1,2-Dihydroperillaldehyde derivatives of our invention) and ketones; lactones; other cyclic organic materials including aryl compounds, alicyclic compounds, heterocyclics such as furans, pyridines, pyrazines and the like; sulfur-containing compounds including thiols, sulfides, disulfides and the like; proteins; lipids, carbohydrates; so-called flavor potentiators such as monosodium glutamate; magnesium glutamate, calcium glutamate, guanylates and inosinates; natural flavoring materials such as cocoa, vanilla and caramel; essential oils and extracts such as anise oil, clove oil and the like and artificial flavoring materials such as vanillin, ethyl vanillin and the like.

Specific preferred flavor adjuvants include but are not limited to the following: anise oil; ethyl 2-methylbutyrate; vanillin; cis-3-heptenol; cis-3-hexenol; trans-2-heptenal; butyl valerate; 2,3-diethylpyrazine; methyl cyclopentenolone; benzaldehyde; valerian oil; 3,4-dimethoxyphenol; amyl acetate; amyl cinnamate; gamma-butyrolactone; furfural; trimethylpyrazine; phenylacetic acid; isovaleraldehyde; ethyl maltol; ethyl vanillin; ethyl valerate; ethyl butyrate; cocoa extract; coffee extract; peppermint oil; spearmint oil; clove oil; anethole; cardamom oil; wintergreen oil; cinnamic aldehyde; ethyl 2-methylvalerate; gamma-hexenyl lactone; 2,4-heptadienal; methyl thiazole alcohol (4-methyl-5-.beta.-hydroxyethyl thiazole); 2-methylbutanethiol; 4-mercaptobutan-2-one; 3-mercaptopentan-2-one; 1-mercapto-2-propene; benzaldehyde; furfural; furfuryl alcohol; 2-mercaptopropionic acid; alkyl pyrazine; methylpyrazine; 2-ethyl-3-methylpyrazine; tetramethylpyrazine; polysulfides; dipropyl disulfide; benzyl methyl disulfide; alkyl thiophene; 2,3-dimethylthiophene; 5-methylfurfural; 2-acetylfuran; 2,4-decadienal; guiacol; phenylacetaldehyde; beta-decalactone; d-limonene; acetoin; amyl acetate; maltol; ethyl butyrate; levulinic acid; piperonal; ethyl acetate; octanal; valeraldehyde; hexanal; diacetyl; monosodium gulatamate; monopotassium glutamate; sulfur-containing amino acids, e.g., cysteine; hydrolyzed vegetable protein; 2-methylfuran-3-thiol; 2-methyldihydrofuran-3-thiol; 2,5-dimethylfuran-3-thiol; hydrolyzed fish protein; tetramethylpyrazine; propyl propenyl disulfide; propyl propenyl trisulfide; diallyl disulfide; diallyl trisulfide; dipropenyl disulfide; dipropenyl trisulfide; 4-methyl-2-[(methylthio)-ethyl]-1,3-dithiolane; 4,5-dimethyl-2-(methylthiomethyl)-1,3-dithiolane; and 4-methyl-2-(methylthiomethyl)-1,3-dithiolane. These and other flavor ingredients are provided in U.S. Pat. Nos. 6,110,520 and 6,333,180 hereby incorporated by reference.

The 1,2-Dihydroperillaldehyde derivative(s) of our invention or compositions incorporating them, as mentioned above, can be combined with one or more vehicles or carriers for adding them to the particular product. Vehicles can be edible or otherwise suitable materials such as ethyl alcohol, propylene glycol, water and the like, as described supra. Carriers include materials such as gum arabic, carrageenan, xanthan gum, guar gum and the like.

1,2-Dihydroperillaldehyde prepared according to our invention can be incorporated with the carriers by conventional means such as spray-drying, drum-drying and the like. Such carriers can also include materials for coacervating the 1,2-Dihydroperillaldehyde of our invention to provide encapsulated products, as set forth supra. When the carrier is an emulsion, the flavoring composition can also contain emulsifiers such as mono- and diglycerides or fatty acids and the like. With these carriers or vehicles, the desired physical form of the compositions can be prepared.

The quantity of 1,2-Dihydroperillaldehyde derivative(s) utilized should be sufficient to impart the desired flavor characteristic to the product, but on the other hand, the use of an excessive amount of 1,2-Dihydroperillaldehyde is not only wasteful and uneconomical, but in some instances, too large a quantity may unbalance the flavor or other organoleptic properties of the product consumed. The quantity used will vary depending upon the ultimate foodstuff; the amount and type of flavor initially present in the foodstuff; the further process or treatment steps to which the foodstuff will be subjected; regional and other preference factors; the type of storage, if any, to which the product will be subjected; and the preconsumption treatment such as baking, frying and so on, given to the product by the ultimate consumer. Accordingly, the terminology "effective amount" and "sufficient amount" is understood in the context of the present invention to be less than 0.15 ppm and quantitatively adequate to alter the flavor of the foodstuff.

The following are provided as specific embodiments of the present invention. Other modifications of this invention will be readily apparent to those skilled in the art, without departing from the scope of this invention. As used herein, both specification and following examples all percentages are weight percent unless noted to the contrary. IFF as used in the examples is understood to mean International Flavors & Fragrances Inc., DPG is understood to mean dipropylene glycol, DEP is understood to mean diethyl phthalate.

### Example A

### Preparation of 1,2-Dihydroperillaldehyde

Fifty grams of distilled Limnophila oil were obtained from South East Asia (Vietnam) and subsequently analyzed by Gas Chromatography, Gas Chromatography/Mass Spectrometry (GC/MS). The oil had a regular citrus aroma plus spicy, cumin additional notes. The GC-MS revealed a regular citrus component profile plus two isomeric unknown oxygenated monoterpene components. GC-olfactometry was conducted on the oil mixture to assess the aroma characteristics of these unknown components. The two isomeric notes were found to be the components contributing towards the additional notes. These two isomeric components were found to be 1,2-Dihydroperillaldehyde. They were subsequently confirmed by synthesis of this molecule, acquisition of the mass spectra and standard retention data on polar and non-polar phases.

**Oil Composition**

| | |
|---|---|
| Myrcene | 36.89 % |
| Limonene | 31.98 % |
| cis-1,2-Dihydroperillaldehyde | 3.83 % |
| trans-1,2-Dihydroperillaldehyde | 8.96 % |
| trans-beta-Ocimene | 4.38 % |
| alpha-Pinene | 2.48 % |
| Camphor | 1.73 % |
| alpha-Humulene | 1.36 % |
| beta-Caryophyllene | 1.00 % |
| m-Camphorene | 0.84 % |

### Synthesis

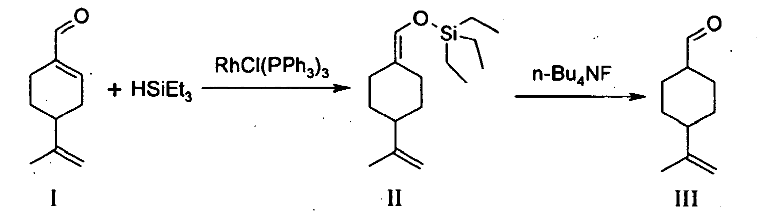

A mixture of perillaldehyde (I) (1.00 equiv, available from Aldrich Chemical Company), triethylsilane (1.05 equiv, Aldrich Chemical Company), and tris(triphenylphosphine)rhodium(I) chloride (Wilkinson's catalyst), 0.006 equiv, Aldrich Chemical Company) in methylene chloride was refluxed for 24 hours, concentrated, and filtered. The filtrate solution was distilled to give triethyl-(4-isopropenyl-cyclohexylidenemethoxy)-silane (II) in 67% yield. A solution of triethyl-(4-isopropenyl-cyclohexylidenemethoxy)-silane (1.00 equiv) in tetrahydrofuran was treated with tetra-n-butylammonium fluoride (1.00 equiv, Aldrich) for 1.5 hour. The solution was quenched with water, concentrated, and distilled to give 1,2-Dihydroperillaldehyde (III) in 56% yield.

The synthesized molecule was made up at 0.15 ppm in sugar/water solution and panelled with a team of flavorists. The following descriptors were assigned: Floral, melon, seedy, woody, cucumber, sweaty, animalic, over ripe, watermelon, cumin, green, fatty, spicy, turmeric, oily, aldehydic, lactonic, massia lactones, nut, lime, waxy, plastic, rind, hay and grass.
The NMR of cis-1,2-Dihydroperillaldehyde is as follows: 1.20-1.39(m, 2H); 1.58-1.68(m, 4H); 1.69(s, 3H); 1.84-1.97(m, 1H); 2.16-2.28(m, 2H); 2.45(m, 1H); 4.71(br s, 1H); 9.24(s, 1H)
The NMR of trans-1,2-Dihydroperillaldehyde is as follows: 1.20-1.39 (m, 4H); 1.73(s, 3H); 1.84-2.16 (m, 5H); 2.16-2.28(m, 1H); 4.66 (br s, 1H); 4.69 (brs, 1H); 9.65(d,1H J= 1.3Hz)

### Example I

Two batches of a typical high fat ice cream were prepared using 0.1% of a Dulce de leche flavor. One batch of the ice cream contained 100 ppb or 0.00001% 1,2-Dihydroperillaldehyde and the Dulce de leche flavor, see Table II. The second batch only contained the flavor, see Table I. The ice cream was then shown blind to a panel of technical personnel for evaluation. The panel preferred the sample containing the 1,2-Dihydroperillaldehyde over the control. The panel comments were that the sample containing the 1,2-Dihydroperillaldehyde was more candy, more caramelic and had a fresh milk note.

**Table I**

| **Dulce de Leche Flavor (Control)** | |
|---|---|
| Ethyl cyclotene | 1.00% |
| Vanillin | 2.00% |
| Cyclotene | 0.30% |
| Furaneol | 0.50% |
| delta- | |
| Dodecalactone | 0.40% |
| Diacetyl | 0.10% |
| Pentan-2,3-dione | 0.10% |
| Acetyl methyl | |
| carbinol | 0.40% |
| Propylene glycol | 95.20% |

**Table II**

| **Dulce de Leche Flavor** | |
|---|---|
| Ethyl cyclotene | 1.00% |
| Vanillin | 2.00% |
| Cyclotene | 0.30% |
| Furaneol | 0.50% |
| Delta-Dodecalactone | 0.40% |
| Diacetyl | 0.10% |
| Pentan-2,3-dione | 0.10% |
| Acetyl methyl carbinol | 0.40% |
| 1,2- | |
| Dihydroperillaldehyde | 0.01% |
| Propylene glycol | 95.19% |

### Example 2

A honey flavor containing 1,2-Dihydroperillaldehyde was evaluated in hard candy. The first sample contained 0.05% of a Honey flavor and 250 ppb or 0.000025% 1,2-Dihydroperillaldehyde, see Table IV. A control sample containing only the Honey flavor was also made for comparison, see Table III. The samples were then evaluated blind by a panel of four personnel. The panel preferred the sample with the 1,2-Dihydroperillaldehyde over the control. The overall comments were that the 1,2-Dihydroperillaldehyde made the honey flavor taste more natural.

**Table III**

| **Honey Flavor (Control)** | |
|---|---|
| Phenylacetic acid | 0.50% |
| Phenylethyl alcohol | 0.50% |
| Damascenone | 0.05% |
| Diacetyl | 0.03% |
| beta-Ionone | 0.05% |
| Anisaldehyde | 0.02% |
| Phenylacetaldehyde | 0.20% |
| Dimethyl sulfide | 0.04% |
| cis-3-Hexenol | 0.04% |
| Propylene glycol | 98.57% |

**TABLE IV**

| **Honey Flavor** | |
|---|---|
| Phenylacetic acid | 0.50% |
| Phenylethyl alcohol | 0.50% |
| Damascenone | 0.05% |
| Diacetyl | 0.03% |
| beta-Ionone | 0.05% |
| Anisaldehyde | 0.02% |
| Phenylacetaldehyde | 0.20% |
| Dimethyl sulfide | 0.04% |
| cis-3-Hexenol | 0.04% |
| 1,2-Dihydroperillaldehyde | 0.05% |
| Propylene Glycol | 98.52% |

### Example 3

A tasting solution of 8% sugar and 0.1% citric acid was made and two Orange flavor samples were evaluated. The Orange flavor was prepared with a 50/50 blend of single fold orange oils from Florida. The first sample contained 100 ppb or 0.00001% 1,2-Dihydroperillaldehyde and 10 ppm or 0.001% Orange oil. The second sample contained only the Orange oil. Both samples were evaluated in a blind tasting by a trained technical panel of five personnel. The sample containing the 1,2-Dihydroperillaldehyde was preferred by the panel because it added a fresher and juicier character to the orange oil.

### Example 4

A 0.3% salt water tasting solution was made to evaluate a cilantro flavor. A sample containing 0.05% cilantro flavor and 50 ppb or 0.000005% 1,2-Dihydroperillaldehyde, see Table VI, was evaluated compared to a sample only containing the cilantro flavor, see Table V. The samples were evaluated in a blind tasting by a trained technical panel of four personnel. The panel preferred the sample containing the 1,2-Dihydroperillaldehyde because it added a fresh green character and gave the flavor more complexity.

**Table V**

| **Cilantro Flavor (Control)** | |
|---|---|
| trans-2-Dodecenal | 5.00% |
| Dodecanal | 1.40% |
| Hexanal | 0.50% |
| Linalool | 1.50% |
| cis-3-Hexenol | 1.00% |
| Methyl chavicol | 0.10% |
| Propylene glycol | 90.50% |

**TABLE VI**

| **Cilantro Flavor** | |
|---|---|
| trans-2-Dodecenal | 5.00% |
| Dodecanal | 1.40% |
| Hexanal | 0.50% |
| Linalool | 1.50% |
| cis-3-Hexenol | 1.00% |
| Methyl chavicol | 0.10% |
| 1,2-Dihydroperillaldehyde | 0.01% |
| Propylene glycol | 90.490% |

## Claims

1. A method for improving, enhancing or modifying the flavor of a foodstuff through the addition of less than 0.15 parts per million of 1,2-Dihydroperillaldehyde.

2. The method of claim 1 wherein the level of 1,2-Dihydroperillaldehyde is from about 100 parts per billion to about 0.001 parts per million.

3. The method of claim 1 wherein the level of 1,2-Dihydroperillaldehyde is from about 50 parts per billion to about 10 parts per million.

4. The method of any of claims 1 to 3 wherein the flavor is incorporated into a foodstuff selected from the group consisting soy-containing products, milk and dairy products, candies, cereals, herbs, chocolate containing products, soft drinks and snacks.

5. The method of claim 4 wherein the level of 1,2-Dihydroperillaldehyde is less than about 100 parts per billion by weight in the food product.

6. The method of claim 4 or claim 5 wherein the foodstuff is a dairy product.

7. The method of claim 4 or claim 5 wherein the foodstuff is an herb selected from the group consisting of basil, dill weed, parsley, oregano, marjoram, sage, thyme, rosemary, mint, cilantro, tarragon, chervil and mixtures thereof.

8. A foodstuff comprising in combination a dairy product and 1,2-Dihydroperillaldehyde, wherein the level of 1,2-Dihydroperillaldehyde is less than 0.15 parts per million by weight in the foodstuff.

9. The foodstuff of claim 8 wherein the level of 1,2-Dihydroperillaldehyde is less than from about 100 parts per billion to about 50 parts per billion by weight in the foodstuff.

10. A foodstuff comprising in combination a citrus product and 1,2-Dihydroperillaldehyde, wherein the level of 1,2-Dihydroperillaldehyde is less than 0.15 parts per million by weight in the foodstuff.

11. The foodstuff of claim 10 wherein the level of 1,2-Dihydroperillaldehyde is less from about 10 parts per billion to about 1 parts per billion by weight in the foodstuff.

12. A foodstuff comprising in combination a meat product and 1,2-Dihydroperillaldehyde, wherein the level of 1,2-Dihydroperillaldehyde is less than 0.15 parts per million by weight in the foodstuff.

13. The foodstuff of claim 12 wherein the level of 1,2-Dihydroperillaldehyde is less from about 10 parts per billion to about 1 parts per billion by weight in the foodstuff.

## Patentansprüche

1. Verfahren zum Verbessern, Verstärken oder Modifizieren des Geschmacks eines Lebensmittels durch die Zugabe von weniger als 0,15 Teile pro Million 1,2-Dihydroperillaldehyd.

2. Verfahren nach Anspruch 1, wobei der Gehalt von 1,2- Dihydroperillaldehyd von etwa 100 Teile pro Milliarde bis etwa 0,001 Teile pro Million beträgt.

3. Verfahren nach Anspruch 1, wobei der Gehalt von 1,2- Dihydroperillaldehyd von etwa 50 Teile pro Milliarde bis etwa 10 Teile pro Million beträgt.

4. Verfahren nach irgendeinem der Ansprüche 1 bis 3, wobei der Geschmack in ein Lebensmittel eingebracht ist, das aus der Gruppe ausgewählt ist, die aus Soja haltigen Produkten, Milch und Molkereiprodukten, Süßigkeiten, Zerealien, Kräutern, Schokolade haltigen Produkten, Limonaden und Snacks besteht.

5. Verfahren nach Anspruch 4, wobei der Gehalt von 1,2- Dihydroperillaldehyd weniger als etwa 100 Gewichts-Teile pro Milliarde beträgt.

6. Verfahren nach Anspruch 4 oder 5, wobei das Lebensmittel ein Molkereiprodukt ist.

7. Verfahren nach Anspruch 4 oder 5, wobei das Lebensmittel ein Küchenkraut ist, das aus der Gruppe ausgewählt ist, die aus Basilikum, Dill, Petersilie, Oregano, Majoran, Salbei, Thymian, Rosmarin, Minze, Koriander, Estragon, Kerbel und Mischungen davon besteht.

8. Lebensmittel, das ein Molkereiprodukt zusammen mit 1,2-Dihydroperillaldehyd aufweist, wobei der Gehalt von 1,2-Dihydroperillaldehyd weniger als 0,15 Gewichts-Teile pro Million in dem Lebensmittel beträgt.

9. Lebensmittel nach Anspruch 8, wobei der Gehalt von 1,2-Dihydroperillaldehyd weniger als von etwa 100 Teile pro Milliarde bis etwa 50 Gewichts-Teile pro Milliarde in dem Lebensmittel beträgt.

10. Lebensmittel, das ein Zitrusprodukt in Kombination mit 1,2-Dihydroperillaldehyd aufweist, wobei der Gehalt von 1,2-Dihydroperillaldehyd weniger als 0,15 Gewichts-Teile pro Million in dem Lebensmittel beträgt.

11. Lebensmittel nach Anspruch 10, wobei der Gehalt von 1,2-Dihydroperillaldehyd weniger als von etwa 10 Teile pro Milliarde bis etwa 1 Gewichts-Teile pro Milliarde in dem Lebensmittel beträgt.

12. Lebensmittel, das ein Fleischerzeugnis in Kombination mit 1,2-Dihydroperillaldehyd aufweist, wobei der Gehalt von 1,2-Dihydroperillaldehyd weniger als 0,15 Gewichts-Teile pro Million in dem Lebensmittel beträgt.

13. Lebensmittel nach Anspruch 12, wobei der Gehalt von 1,2-Dihydroperillaldehyd weniger als von etwa 10 Teile pro Milliarde bis etwa 1 Gewichts-Teile pro Milliarde in dem Lebensmittel beträgt.

## Revendications

1. Procédé pour améliorer, accentuer ou modifier l'arôme d'une denrée alimentaire par l'addition de moins de 0,15 partie par million de 1,2-dihydropérillaldéhyde.

2. Procédé selon la revendication 1, dans lequel le taux de 1,2-dihydropérillaldéhyde est d'environ 100 parties par milliard à environ 0,001 partie par million.

3. Procédé selon la revendication 1, dans lequel le taux de 1,2-dihydropérillaldéhyde est d'environ 50 parties par milliard à environ 10 parties par million.

4. Procédé selon l'une quelconque des revendications 1 à 3, dans lequel l'arôme est incorporé dans une denrée alimentaire choisie dans le groupe consistant en les produits contenant du soja, le lait et les produits laitiers, les bonbons, les céréales, les herbes, les produits contenant du chocolat, les boissons non alcoolisées et les amuse-gueules.

5. Procédé selon la revendication 4, dans lequel le taux de 1,2-dihydropérillaldéhyde est inférieur à 100 parties par milliard en poids dans le produit alimentaire.

6. Procédé selon la revendication 4 ou la revendication 5, dans lequel la denrée alimentaire est un produit laitier.

7. Procédé selon la revendication 4 ou la revendication 5, dans lequel la denrée alimentaire est une herbe choisie dans le groupe consistant en le basilic, l'aneth, le persil, l'origan, la marjolaine, la sauge, le thym, le romarin, la menthe, la coriandre, l'estragon, le cerfeuil et leurs mélanges.

8. Denrée alimentaire comprenant en combinaison un produit laitier et du 1,2-dihydropérillaldéhyde où le taux de 1,2-dihydropérillaldéhyde est inférieur à 0,15 partie par million en poids dans la denrée alimentaire.

9. Denrée alimentaire selon la revendication 8, dans laquelle le taux de 1,2-dihydropérillaldéhyde est inférieur à environ 100 parties par milliard à environ 50 parties par milliard en poids dans la denrée alimentaire.

10. Denrée alimentaire comprenant en combinaison un produit d'agrume et du 1,2-dihydropérillaldéhyde où le taux de 1,2-dihydropérillaldéhyde est inférieur à 0,15 partie par million en poids dans la denrée alimentaire.

11. Denrée alimentaire selon la revendication 10, dans laquelle le taux de 1,2-dihydropérilialdéhyde est inférieur à environ 10 parties par milliard à environ 1 partie par milliard en poids dans la denrée alimentaire.

12. Denrée alimentaire comprenant en combinaison un produit de viande et du 1,2-dihydropérillaldéhyde où le taux de 1,2-dihydropérillaldéhyde est inférieur à 0,15 partie par million en poids dans la denrée alimentaire.

13. Denrée alimentaire selon la revendication 12, dans laquelle le taux de 1,2-dihydropérillaldéhyde est inférieur à environ 10 parties par milliard à environ 1 partie par milliard en poids dans la denrée alimentaire.
